# EUROPÄISCHE PATENTSCHRIFT

(11) **EP 0 933 415 B1**
(45) Veröffentlichungstag und Bekanntmachung des Hinweises auf die Patenterteilung: **10.09.2003**
(21) Anmeldenummer: 98124679.6
(22) Anmeldetag: 24.12.1998
(51) Int. Cl.: C10L 3/00

(54) **Additive zur Inhibierung der Gashydratbildung**
Additives for inhibition of gas hydrates formation
Additifs pour la réduction de la formation d' hydrates de gaz

(30) Priorität: 29.01.1998 DE 19803384
(43) Veröffentlichungstag der Anmeldung: 04.08.1999
(73) Patentinhaber: Clariant GmbH, 65929 Frankfurt am Main (DE)
(72) Erfinder: Klug, Peter, Dr., 63762 Grossostheim (DE); Holtrup, Frank, Dr., 84504 Burgkirchen (DE)

(56) Entgegenhaltungen:
- WO-A-96/38492
- WO-A-98/23843
- W.D. YOUNG ET AL.: "ENHANCED HYDRATE INHIBITORS: POWERFUL SYNERGISM WITH GLYCOL ETHERS." AMERICAN CHEMICAL SOCIETY PREPRINTS OF PAPERS PRESENTED AT THE 213 ACS NATIONAL MEETING , Bd. 24, Nr. 2, 13. - 17. April 1997, XP002118781 SAN FRANCISCO

## Beschreibung

Die vorliegende Erfindung betrifft ein Additiv und ein Verfahren zur Inhibierung von Keimbildung, Wachstum und/oder Agglomeration von Gashydraten, indem einem zur Hydratbildung neigenden, aus Wasser, Gas und gegebenenfalls Kondensat bestehenden Mehrphasengemisch eine wirksame Menge eines Inhibitors zugegeben wird, der 2-lsobutoxyethanol enthält.

Gashydrate sind kristalline Einschlußverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst alleine ist thermodynamisch instabil, erst durch die Einbindung von Gasmolekülen wird das Gitter stabilisiert und es entsteht eine eisähnliche Verbindung, die in Abhängigkeit von Druck und Gaszusammensetzung auch über den Gefrierpunkt von Wasser (bis über 25 °C) hinaus existieren kann. Ein Überblick über das Thema Gashydrate ist in Sloan, Clathrate Hydrates of Natural Gases, M. Dekker, New York, 1990 gegeben.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Naßgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zu Blockierung verschiedenster Fördereinrichtungen, wie Pipelines, Ventilen oder Produktionseinrichtungen, in denen über längere Strecken bei niedrigeren Temperaturen Naßgas oder Mehrphasengemische transportiert werden, wie dies speziell in kälteren Regionen der Erde oder auf dem Meeresboden vorkommt. Außerdem kann die Gashydratbildung auch beim Bohrvorgang zur Erschließung neuer Gas- oder Erdöllagerstätten bei entsprechenden Druck- und Temperaturverhältnissen zu Problemen führen.

Um solche Probleme zu vermeiden, kann die Gashydratbildung in Gaspipelines oder beim Transport von Mehrphasengemischen durch Einsatz von größeren Mengen (über 10 Gew.-%) niederer Alkohole, wie Methanol, Glykol, oder Diethylenglykol unterdrückt werden. Der Zusatz dieser Additive bewirkt, daß die thermodynamische Grenze der Gashydratbildung nach niedrigeren Temperaturen und höheren Drücken verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, in dem man in den Temperatur- und Druckbereichen, in denen sich Gashydrate bilden können, Additive (Einsatzmenge < 2 Gew.-%) zusetzt, die die Gashydratbildung entweder zeitlich hinauszögern (kinetische Inhibitoren) oder die Gashydratagglomerate klein und damit pumpbar halten, so daß diese durch die Pipeline transportiert werden können (sog. Agglomerat-Inhibitoren oder Anti-Agglomerates).

Als Gashydratinhibitoren wurden im Stand der Technik neben den thermodynamischen Inhibitoren eine Vielzahl monomerer und polymerer Substanzklassen beschrieben, die kinetische Inhibitoren oder Agglomeratinhibitoren darstellen.

WO-96/08636 beschreibt oberflächenaktive Substanzen als Gashydratinhibitoren, die eine polare Kopfgruppe und einen hydrophoben Rest tragen, wobei im hydrophoben Rest nicht mehr als 12 Kohlenstoffatome enthalten sind. Als Beispiele werden Natriumvalerat, Butanol, Butylsulfat und Butylsulfonat, Alkylpyrrolidone sowie ein Zwitterion der Formel R₂N(CH₃)₂-(CH₂)₄SO₃⁻ genannt.

WO-96/08456 beschreibt synergistische Mischungen aus den in WO-96/08636 offenbarten Substanzen mit wasserlöslichen Copolymeren.

W.D. Young et al. (American Chemical Society, Vol. 42, No.2; Preprints of Papers presented at the 213th ACS National Meeting San Francisco, CA, April 13-17, 1997) beschreiben synergistische Mischungen aus Amidpolymeren mit niederen Alkoholen und Glykolethern. Hierbei zeigen 2-Butoxyethanol und 2-(2-Butoxyethoxy)-ethanol (Butyldiglykol) besonders gute Wirksamkeit.

Um Gashydratinhibitoren auch bei niedrigeren Temperaturen als zur Zeit möglich, d.h. weiter innerhalb der Hydratregion einsetzen zu können, bedarf es einer weiteren Wirkungssteigerung der verfügbaren Hydratinhibitoren. Aufgabe der vorliegenden Erfindung war es also, verbesserte Additive zu finden, die die Bildung von Gashydraten verlangsamen (kinetische Inhibitoren) bzw. die Gashydratagglomerate klein und pumpbar halten (Anti-Agglomerates), um die zur Zeit noch verwendeten thermodynamischen Inhibitoren (Methanol und Glykole), die beträchtliche Sicherheitsprobleme und Logistikprobleme verursachen, ersetzen zu können.

Wie nun überraschenderweise gefunden wurde, zeigt der Glykolether 2-lsobutoxyethanol eine deutlich verbesserte Wirksamkeit als Gashydratinhibitor als die bisher im Stand der Technik beschriebenen Alkohole und Glykolether. 2-lsobutoxyethanol kann, wie in den beigefügten Beispielen gezeigt, in niedriger Dosierung weitaus effektiver die Bildung von Gashydraten unterbinden, als dies bei gleicher Einsatzmenge durch das literaturbekannte 2-Butoxyethanol möglich ist.

Gegenstand der Erfindung ist ein Additiv zur Inhibierung der Gashydratbildung, gekennzeichnet durch einen Gehalt an
a) 5 bis 90 Gew.-% 2-lsobutoxyethanol, und
b) 5 bis 60 Gew.-% eines Copolymers, das Struktureinheiten aufweist, die sich von Maleinsäure, Maleinsäureanhydrid oder Derivaten der Maleinsäure oder des Maleinsäureanhydrids ableiten,
c) mindestens 10 Gew.-% Wasser oder einen einwertigen oder mehrwertigen Alkohol außer 2-Isobutoxyethanol, oder Mischungen aus den genannten Stoffen,
bezogen auf das Gesamtgewicht des Additivs, wobei die Summe der Gehalte der Verbindungen a) und b) zwischen 10 und 90 Gew.-% beträgt.

Die erfindungsgemäßen Additive enthalten vorzugsweise 10 bis 80, insbesondere 15 bis 50 Gew.-% 2-Isobutoxyethanol, und vorzugsweise 10 bis 50 Gew.-%, insbesondere 20 bis 30 Gew.-% eines Copolymers entsprechend b) obiger Definition. Die Summe der Gehalte beträgt vorzugsweise 20 bis 80 Gew.-%. Weitere Bestandteile des Additivs sind gemäß c) Wasser, einwertige oder mehrwertige Alkohole außer 2-lsobutoxyethanol zu mindestens 10 Gew.-%. Bevorzugt als weitere Komponenten sind neben Wasser wasserlösliche einwertige Alkohole mit 1 bis 4 Kohlenstoffatomen. Weiterhin bevorzugt sind kurzkettige zweiwertige Alkohole wie beispielsweise Ethylenglykol. Das Additiv kann alleine oder in Kombination mit anderen bekannten Gashydratinhibitoren eingesetzt werden. Typische, in der mit dem Gas in Verbindung stehenden Wasserphase erreichte Einsatzkonzentrationen sind 0.01-2 Gew.-% Additiv im Wasser, speziell Konzentrationen zwischen 0.02-1,0 Gew.-% (200-10 000 ppm).

Ein weiterer Gegenstand der Erfindung ist ein Verfahren zur Inhibierung der Bildung von Gashydraten, dadurch gekennzeichnet, daß der mit dem Gas in Kontakt stehenden Wasserphase 2-lsobutoxyethanol zugesetzt wird. Der Wasserphase wird vorzugsweise so viel 2-lsobutoxyethanol zugegeben, daß die Konzentration im Wasser mehr als 0,005 Gew.-% beträgt, insbesondere kann die 2-Isobutoxyethanol-Konzentration zwischen 0,01 und 2, speziell zwischen 0,02 und 1 Gew-% betragen. Im Rahmen des erfindungsgemäßen Verfahrens können der Wasserphase neben 2-Isobutoxyethanol weitere Gashydratinhibitoren zugegeben werden.

Das erfindungsgemäße Additiv und das erfindungsgemäße Verfahren sind besonders gut für die Inhibierung von Hydraten von Erdgas geeignet.

2-Isobutoxyethanol besitzt kaum tensidische Wirkung, was sich besonders im Bezug auf die Schaumwirkung günstig auswirkt, da gängige tensidische Additive oft zu schwerwiegenden Schaumproblemen führen.

Werden als Komponente b) des Additivs Derivate der Maleinsäure oder des Maleinsäureanhydrids verwendet, so handelt es sich dabei vorzugsweise um Halbamide, Diamide, Halbester oder Diester. Amide oder Ester tragen vorzugsweise Alkylreste mit 1 bis 7 Kohlenstoffatomen. In besonders bevorzugten Ausführungsformen der Erfindung ist die Komponente b) ein Copolymer aus Vinylacetat, Maleinsäuremonoisobutylamid und Maleinsäuremono((3-dimethylamino)propylamid). Ester und Amide dieser Art können beispielsweise durch Reaktion eines Copolymeren aus Vinylacetat und Maleinsäure/Maleinsäureanhydrid mit Alkoholen und/oder Aminen hergestellt werden.

Besonders geeignete weitere Gashydratinhibitoren zur Mischung mit dem erfindungsgemäßen Additiv oder zur Verwendung im erfindungsgemäßen Verfahren sind Polymere mit einem durch Polymerisation erhaltenen Kohlenstoff-Backbone und Amidbindungen in den Seitenketten. Hierzu zählen besonders Polymere wie Polyvinylpyrrolidon, Polyvinylcaprolactam, Copolymere aus Vinylpyrrolidon und Vinylcaprolactam, Copolymere aus Vinylcaprolactam und N-Methyl-N-vinylacetamid sowie Terpolymere von Vinylpyrrolidon, Vinylcaprolactam und weiteren anionischen, kationischen und neutralen Comonomeren mit vinylischer Doppelbindung wie 2-Dimethylaminoethylmethacrylat, 1-Olefinen, N-Alkylacrylamiden, N-Vinylacetamid, Acrylamid, Natrium-2-acrylamido-2-methyl-1-propansulfonat (AMPS) oder Acrylsäure. Weiterhin sind auch Mischungen mit Homo- und Copolymeren von N,N-Dialkylacrylamiden wie N-Acryloylpyrrolidin, N-Acryloylmorpholin und N-Acryloyl-piperidin geeignet. Ebenfalls sind Mischungen mit Alkylpolyglykosiden, Hydroxyethylcellulose, Carboxymethylcellulose sowie anderen ionischen oder nichtionischen Tensidmolekülen geeignet. Besonders geeignet für das erfindungsgemäße Verfahren sind auch Mischungen von 2-lsobutoxyethanol mit Gashydratinhibitoren auf Basis von mit Mono- und/oder Diaminen umgesetzten Maleinsäureanhydridcopolymeren. Hierunter sind modifizierte Vinylacetat-Maleinsäureanhydrid-Copolymere besonders bevorzugt. Diese Verbindungen sind auch als Komponente b) des erfindungsgemäßen Additivs bevorzugt. Diese weiteren bevorzugten Komponenten können im erfindungsgemäßen Additiv vorzugsweise von 0 bis 40 Gew.-%, insbesondere von 5 bis 20 Gew.-% enthalten sein.

2-Isobutoxyethanol kann, ebenso wie die erfindungsgemäßen Additive, die 2-Isobutoxyethanol enthalten, bei der Erdöl- und Erdgasförderung mittels gängiger Ausrüstung, wie etwa Injektionspumpen o.ä., dem für die Hydratbildung anfälligen Mehrphasengemisch zugegeben werden. Aufgrund der guten Wasserlöslichkeit von 2-Isobutoxyethanol ist eine schnelle und gleichmäßige Verteilung des Inhibitors in der zur Hydratbildung neigenden Wasserphase gegeben. Im allgemeinen reicht die Zugabe der wäßrig-alkoholischen, 2-lsobutoxyethanol enthaltenden Inhibitormischung, um eine gleichmäßige Verteilung zu erreichen.

2-lsobutoxyethanol kann nach literaturbekannten Verfahren aus Isobutanol durch Umsetzung mit Ethylenoxid hergestellt werden. Das anfallende Gemisch von Glykolethern kann dann zur Gewinnung der reinen Komponenten destillativ getrennt werden. Neben reinem 2-lsobutoxyethanol sind zur Anwendung als Gashydratinhibitor auch Gemische mit Isobutanol undloder höheren Anlagerungsprodukten von Ethylenoxid an Isobutanol geeignet, sofern 2-lsobutoxyethanol darin in ausreichender Menge enthalten ist.

Da der Inhibitor primär die Keimbildung und das Wachstum von Hydratkeimen verzögert oder verhindert, wird die Zugabe des Inhibitors bevorzugt erfolgen, bevor Gashydratbildung auftritt, d.h. noch oberhalb der Gleichgewichtstemperatur der Hydratbildung. Dies ist beispielsweise dann gegeben, wenn man den Inhibitor direkt an der Erdgasquelle zusetzt.

Die Wirksamkeit des erfindungsgemäßen Additivs/Verfahrens wurde anhand eines THF-Hydrat-Tests untersucht. Da natürliche Gashydrate nur bei hohen Drücken existieren, die nur schwer unter Laborbedingungen zugänglich sind, benutzt man als Modell die Bildung von Clathraten aus THF (Tetrahydrofuran) und Wasser. Diese Hydrate bilden sich bei Normaldruck bei 4 °C bei einem molaren Wasser: THF-Verhältnis von 17 : 1. Zeigt ein Additiv nun die Eigenschaft, die Bildung von THF-Hydraten kinetisch zu inhibieren oder die gebildeten THF-Hydrate rührbar zu halten, dann wirkt dieses Additiv/Verfahren ähnlich auf die natürlich vorkommenden Gashydrate.

Wie in den unten angeführten Versuchsbeispielen gezeigt werden kann, setzt die THF-Hydratbildung ohne Inhibitor (Beispiel 1) unter den Versuchsbedingungen schnell ein und führt zur Bildung von THF-Hydraten in nadeliger oder blättchenartiger Form, die die gesamte Testlösung sehr schnell zum Erstarren bringen. Durch Zugabe von 2-lsobutoxyethanol wird die THF-Hydratbildung im Vergleich zu anderen Alkoholen, wie dem in WO-96/08636 erwähnten Butanol oder dem von Young et al. beschriebenen n-Butoxyethanol bei niedriger Konzentration bedeutend verlangsamt und/oder die Kristallform der entstehenden Hydrate verändert.

Der THF-Test wurde folgendermaßen durchgeführt:

### Beispiel 1 (Versuch ohne Inhibitor):

Eine kurze Pasteurpipette (I = 140 mm) wird in einem durchbohrten Korkstopfen so befestigt, daß die Pipettenspitze 120 mm aus dem Korkstopfen herausragt. Dann wird in diese Pipette ein Tropfen Wasser mittels Kapillarwirkung aufgenommen, die Pipette (mit Korkstopfen) tariert und mindestens 2 h bei -20 °C gekühlt. Eine 3,5 %ige Kochsalzlösung wird mit THF im Verhältnis 4 : 1 gemischt. 30 ml dieser Lösung werden in ein Reagenzglas (150 x 30 mm) gegeben und 25 min in einem Kühlbad bei -1 °C temperiert (Eintauchtiefe des Reagenzglases im Kühlbad ca. 60 mm). Die gefrorene Pipette wird aus dem Kühlschrank entnommen, schnell abgewischt (um Kristallkeime auf der Außenseite der Pipette zu entfernen und so einheitliche Startbedingungen zu erhalten) und sofort ca. 15 mm in die obige THF-Wasser-Kochsalzmischung eingetaucht, wobei sich nach kurzer Zeit (Sekunden bis wenige Minuten) THF-Hydrate bilden.

Die Pipette wird nach 60 min sehr vorsichtig aus dem Reagenzglas herausgenommen und die Pipette mit Korkstopfen und anhaftenden Hydraten sofort tariert. Aus der Differenz zwischen Ein- und Auswaage und der abgelaufenen Zeit wird die Wachstumsgeschwindigkeit der THF-Hydratbildung (in g/h) berechnet.

### Beispiele 2-10:

Es wird wie unter Beispiel 1 vorgegangen, jedoch werden der Testlösung 2500 ppm des entsprechenden Inhibitors zugesetzt. Die Auswertung erfolgt wie oben.

Die Ergebnisse sind in Tabelle 1 zusammengefaßt und zeigen die erhöhte Wirksamkeit des erfindungsgemäßen Verfahrens im Vergleich zum Stand der Technik. Die Beispiele 2 bis 7 und 9 entsprechen dem Stand der Technik, die Beispiele 8 und 10 beziehen sich auf das erfindungsgemäße Verfahren.

**Tabelle 1:**

| THF-Test, Hydratwachstumsgeschwindigkeiten | | | |
|---|---|---|---|
| Bsp. | Inhibitor | Wachstumsgeschwindigkeit (g/h) | Strukturformel |
| 1 | ohne | > 20 | |
| 2 | Methanol | > 20 | CH₃OH |
| 3 | Isopropanol | 6.7 | (CH₃)₂CHOH |
| 4 | n-Butanol | 6.0 | CH₃-CH₂₋CH₂₋CH₂OH |
| 5 | Isobutanol | 5.4 | (CH₃)₂CH-CH₂OH |
| 6 | 2-Butoxyethanol | 4.1 | CH₃-(CH₂)₃-O-(CH₂)₂OH |
| 7 | 2-(2-Butoxy-ethoxy)ethanol | 8.1 | CH₃-(CH₂)₃-O-(CH₂)₂-O-(CH₂)₂-OH |
| 8 | 2-lsobutoxyethanol | 0.05 | (CH₃)₂CH-CH₂-O-(CH₂)₂-OH |
| 9 | 2-(2-lsobutoxyethoxy)ethanol | 7.2 | (CH₃)₂CH-CH₂-O-(CH₂)₂-O-(CH₂)₂-OH |
| 10 | Isobutanol x 1.5 EO* | 3.6 | Oxethylat-Mischung, enthält ca. 20 Gew.-% 2-Isobutoxyethanol und ca. 25 Gew.-% Isobutanol |

## Patentansprüche

1. Additiv zur Inhibierung der Gashydratbildung, **gekennzeichnet durch** einen Gehalt an
a) 5 bis 90 Gew.-% 2-lsobutoxyethanol, und
b) 5 bis 60 Gew.-% eines Copolymers, das Struktureinheiten aufweist, die sich von Maleinsäure, Maleinsäureanhydrid oder Derivaten der Maleinsäure oder des Maleinsäureanhydrids ableiten,
c) mindestens 10 Gew.-% Wasser oder einen einwertigen oder mehrwertigen Alkohol außer 2-Isobutoxyethanol, oder Mischungen aus den genannten Stoffen,
bezogen auf das Gesamtgewicht des Additivs, wobei die Summe der Gehalte der Verbindungen a) und b) zwischen 10 und 90 Gew.-% beträgt.

2. Additiv nach Anspruch 1, **gekennzeichnet durch** einen Gehalt an 2-Isobutoxyethanol von 10 bis 80, insbesondere von 15 bis 50 Gew.-%.

3. Additiv nach Anspruch 1 und/oder 2, **gekennzeichnet durch** einen zusätzlichen Gehalt an Polymeren, die ein aus Kohlenstoffatomen gebildetes Rückgrat enthalten, und deren Seitenketten Amidbindungen enthalten.

4. Additiv nach Anspruch 3, **dadurch gekennzeichnet, daß** es sich bei dem Polymeren um Polyvinylpyrrolidon, Polyvinylcaprolactam, Copolymere aus Vinylpyrrolidon und Vinylcaprolactam, Copolymere aus Vinylcaprolactam und N-Methyl-N-vinylacetamid oder Terpolymere von Vinylpyrrolidon, Vinylcaprolactam und weiteren anionischen, kationischen und neutralen Comonomeren mit vinylischer Doppelbindung wie 2-Dimethylaminoethylmethacrylat, 1-Olefinen, N-Alkylacrylamiden, N-Vinylacetamid, Acrylamid, Natrium-2-acrylamido-2-methyl-1-propansulfonat (AMPS) oder Acrylsäure handelt.

5. Additiv nach Anspruch 1, **dadurch gekennzeichnet, daß** die Komponente b) in einer Menge von 10 bis 50 Gew.-%, insbesondere 20 bis 30 Gew.-% vorhanden ist.

6. Additiv nach einem oder mehreren der Ansprüche 1 bis 5, **dadurch gekennzeichnet, daß** es ein mit Mono- und/oder Diaminen umgesetztes Vinylacetat-Maleinsäureanhydrid-Copolymer enthält.

7. Verfahren zur Inhibierung der Bildung von Gashydraten, **dadurch gekennzeichnet, daß** der mit dem Gas in Kontakt stehenden Wasserphase 2-Isobutoxyethanol zugesetzt wird..

8. Verfahren nach Anspruch 7, **dadurch gekennzeichnet, daß** das zu inhibierende Gas Erdgas ist.

9. Verfahren nach Anspruch 7 und/oder 8, **dadurch gekennzeichnet, daß** die mit dem Gas in Kontakt stehende Wasserphase ein Additiv nach Anspruch bis 6 enthält.

10. Verfahren nach einem oder mehreren der Ansprüche 7 bis 9, **dadurch gekennzeichnet, daß** die Wasserphase mindestens 0,005 Gew.-% 2-lsobutoxyethanol oder des Additivs nach einem oder mehreren der Ansprüche 1 bis 6 enthält.

11. Verwendung eines Additivs nach einem oder mehreren der Ansprüche 1 bis 6 zur Inhibierung der Bildung von Gashydraten.

## Claims

1. An additive for inhibiting gas hydrate formation, containing
a) from 5 to 90% by weight of 2-isobutoxyethanol, and
b) from 5 to 60% by weight of a copolymer which has structural units which are derived from maleic acid, maleic anhydride or derivatives of maleic acid or of maleic anhydride, and
c) at least 10% by weight of water or a monohydric or polyhydric alcohol, except the 2-isobutoxyethanol, or mixtures of the stated substances,
based on the total weight of the additive, the sum of the contents of compounds a) and b) being from 10 to 90% by weight.

2. The additive as claimed in claim 1, which contains from 10 to 80, particularly from 15 to 50, % by weight of 2-isobutoxyethanol.

3. The additive as claimed in claims 1 and 2 or claim 1 or 2, which additionally contains polymers which contain a backbone formed from carbon atoms and whose side chains contain amide bonds.

4. The additive as claimed in claim 3, wherein the polymer is polyvinylpyrrolidone, polyvinylcaprolactam, a copolymer of vinylpyrrolidone and vinylcaprolactam, a copolymer of vinylcaprolactam and
N-methyl-N-vinylacetamide or a terpolymer of vinylpyrrolidone, vinylcaprolactam and further anionic, cationic and neutral comonomers having a vinylic double bond, such as 2-dimethylaminoethyl methacrylate, 1-olefin, an N-alkylacrylamide, N-vinylacetamide, acrylamide, sodium 2-acrylamido-2-methyl-1-propanesulfonate (AMPS) or acrylic acid.

5. The additive as claimed in claim 1, wherein the component b) is present in an amount of from 10 to 50% by weight, in particular from 20 to 30% by weight.

6. The additive as claimed in one or more of claims 1 to 5, which contains a vinyl acetate/maleic anhydride copolymer reacted with mono- and/or diamines.

7. A process for inhibiting the formation of gas hydrates, wherein
2-isobutoxyethanol is added to the aqueous phase in contact with the gas.

8. The process as claimed in claim 7, wherein the gas to be inhibited is natural gas.

9. The process as claimed in claims 7 and 8 or claim 7 or 8, wherein the aqueous phase in contact with the gas contains an additive as claimed in any of claims 1 to 6.

10. The process as claimed in one or more of claims 7 to 9, wherein the aqueous phase contains at least 0.005% by weight of 2-isobutoxyethanol or an additive as claimed in one or more of claims 1 to 6.

11. The use of an additive as claimed in one or more of claims 1 to 6 for inhibiting the formation of gas hydrates.

## Revendications

1. Additif pour l'inhibition de la formation d'hydrates de gaz, **caractérisé par** une teneur
a) de 5 à 90 % en poids en 2-isobutoxyéthanol et
b) de 5 à 60 % en poids en un copolymère qui comporte des motifs structuraux dérivant d'acide maléique, d'anhydride maléique ou de dérivés de l'acide maléique ou de l'anhydride maléique,
c) d'au moins 10 % en poids en eau ou en un alcool monohydroxylé ou polyhydroxylé hormis le 2-isobutoxyéthanol, ou en mélanges des substances citées,
par rapport au poids total de l'additif, la somme des teneurs en les composés a) et b) étant comprise entre 10 et 90 % en poids.

2. Additif selon la revendication 1, **caractérisé par** une teneur en 2-isobutoxyéthanol de 10 à 80, en particulier de 15 à 50 % en poids.

3. Additif selon la revendication 1 et/ou 2, **caractérisé par** une teneur supplémentaire en polymères qui comportent un squelette constitué d'atomes de carbone, et dont les chaînes latérales comportent des liaisons amide.

4. Additif selon la revendication 3, **caractérisé en ce que** le polymère consiste en polyvinylpyrrolidone, polyvinylcaprolactame, copolymères de vinylpyrrolidone et vinylcaprolactame, copolymères de vinylcaprolactame et N-méthyl-N-vinylacétamide ou terpolymères de vinylpyrrolidone, vinylcaprolactame et d'autres comonomères anioniques, cationiques et neutres à double liaison vinylique, tels que le méthacrylate de 2-diméthylaminoéthyle, des 1-oléfines, des N-alkylacrylamides, le N-vinylacétamide, l'acrylamide, le 2-acrylamido-2-méthyl-1-propanesulfonate de sodium (AMPS) ou l'acide acrylique.

5. Additif selon la revendication 1, **caractérisé en ce que** le composant b) est présent en une quantité de 10 à 50 % en poids, en particulier de 20 à 30 % en poids.

6. Additif selon une ou plusieurs des revendications 1 à 5, **caractérisé en ce qu'**il contient un copolymère acétate de vinyle/anhydride maléique ayant réagi avec des mono- et/ou diamines.

7. Procédé pour l'inhibition de la formation d'hydrates de gaz, **caractérisé en ce qu'**on ajoute du 2-isobutoxyéthanol à la phase aqueuse qui est contact avec le gaz.

8. Procédé selon la revendication 7, **caractérisé en ce que** le gaz à inhiber est du gaz naturel.

9. Procédé selon la revendication 7 et/ou la revendication 8, **caractérisé en ce que** la phase aqueuse qui est contact avec le gaz contient un additif selon l'une quelconque des revendications 1 à 6.

10. Procédé selon une ou plusieurs des revendications 7 à 9, **caractérisé en ce que** la phase aqueuse contient au moins 0,005 % en poids de 2-isobutoxyéthanol ou de l'additif selon une ou plusieurs des revendications 1 à 6.

11. Utilisation d'un additif selon une ou plusieurs des revendications 1 à 6, pour l'inhibition de la formation d'hydrates de gaz.
